# EUROPEAN PATENT SPECIFICATION

(11) **EP 2 681 894 B1**
(45) Date of publication and mention of the grant of the patent: **06.05.2015**
(21) Application number: 12707287.4
(22) Date of filing: 01.03.2012
(51) Int. Cl.: H04L 29/08

(54) **METHOD FOR PROVIDING SOCIAL PRESENCE INFORMATION IN TELECOMMUNICATION NETWORKS**
VERFAHREN ZUR BEREITSTELLUNG VON PRÄSENZINFORMATIONEN IN TELEKOMMUNIKATIONSNETZEN
PROCÉDÉ PERMETTANT DE DONNER DES INFORMATIONS DE PRÉSENCE SUR MÉDIA SOCIAL DANS DES RÉSEAUX DE TÉLÉCOMMUNICATIONS

(30) Priority: 01.03.2011 ES 201130274 P
(43) Date of publication of application: 08.01.2014
(73) Proprietor: Telefónica, S.A., 28013 Madrid (ES)
(72) Inventor: NUÑEZ DIAZ, Jose, Luis, E-28013 Madrid (ES); FULLEA CARRERA, Eduardo, E-28013 Madrid (ES); MORÓN ABAD, Rafael, E-28013 Madrid (ES)
(74) Representative: Carpintero Lopez, Francisco
(86) International application number: PCT/EP2012/053536
(87) International publication number: WO 2012/117066

(56) References cited:
- WO-A1-2009/078771
- US-A1- 2006 224 688
- US-A1- 2008 235 349
- Oma: "Presence SIMPLE Specification Candidate Version 2.0", , 2 December 2010 (2010-12-02), pages 1-107, XP55028065, Retrieved from the Internet: URL:http://www.openmobilealliance.org/Tech nical/release_program/docs/PresenceSIMPLE/ V2_0-20101202-C/OMA-TS-Presence_SIMPLE-V2_ 0-20101202-C.pdf [retrieved on 2012-05-24]

## Description

### TECHNICAL FIELD OF THE INVENTION

The present invention relates generally to social networking and particularly to notification methods for informing on social presence of subscribers in any communication service provided by converged fixed and mobile networks.

### BACKGROUND OF THE INVENTION

Social presence was defined by the early developers of the social presence (John Short, Ederyn Williams, and Bruce Christie; 1976) as the "degree of salience of the other person in the interaction and the consequent salience of the interpersonal relationships". As computer-mediated communication has evolved, a more relational view of social presence has emerged and has come to be viewed as the way individuals (buddies) represents themselves in their online environment. In this context, social presence is represented by a personal stamp that indicates that the individual is available and willing to engage and connect with other persons in their online community. Thus, social presence is demonstrated by the way these personal indications are posted and how their information is interpreted by others (the watchers). Social presence information let the buddies know about what their contacts are doing, what their mood and status (active or inactive in a communication service), etc., are. The user is given the possibility to publish personal data, which configures his/her Social Presence Information or "personal profile" in a social network. From a communications network point of view, this kind of additional information, closely associated to people, can be used, if it is easily displayed to services, to stimulate new and impulsive communications.
A user's client provides presence information (presence state) via a network connection to a presence service, which is stored in what constitutes his personal availability record (called a presentity) and can be made available for distribution to other users (called watchers) to convey his availability for communication. Presence information has wide application in many communication services.

**Presentity** is an entity described by presence information. The word is a combination of words "presence" and "entity" and was first introduced in RFC 2778. Originally it was defined as entity which provides presence information. Presentity usually refers to a human and describes availability and willingness of this human to communicate via set of communication services. For example users of an instant messaging service (such as ICQ or MSN Messenger) are presentities and their presence information is their user status (online, offline, away, etc.).

Due to Social Networks (facebook, tuenti, ...) and the popularization of the Internet, communications become more than simply getting in touch with some other people, just identified by their contact addresses (telephone numbers, e-mail addresses, instant messaging aliases, etc.). Now, presence information helps people to decide how to get in touch with other people. Let's think about instant messaging services. Every buddy of the contact list is identified by both his/her avatar and also his/her status. Some applications also use the extended status or mood, a free text that people use to say something about themselves or simply how they feel like.

Nowadays, it is usual that an individual is present simultaneously in several networks, via communications, for instance, through his/her cellular phone, which is switched on and properly registered in the (e.g., IMS: IP Multimedia Subsystem) core network, but also with some IM communities (like MSN or Gmail) and one or more Social Networks that also manage Presence Information (including mood, avatars or free text).

A solution to manage in a compelling way the status or mood of a user in the network retrieving presence information from some different (and not related among themselves) sources is needed. Current protocols enable to manage presence information from each source independently, by using a tupla element for each one and mapping the proper identity to the contact address. Regarding the mood or free text included in the presence information of one buddy, they should be merged, instead of replicated, since they are known to belong to the same human being.

Looking at the existing models (RFC4479: "A Data Model for Presence"), a person data component is specified by characteristics of the user (static data) and his/her status (dynamic data), which can include several occurrences of a note attribute. RFC4479 introduces a <person> element that has a mandatory "id" attribute, which contains the occurrence identifier for the person, and any number of elements indicating status and characteristic information. This is followed by zero or more optional <note> elements. RFC 3863 ("Presence Information Data Format: PDIF") defines the <note> element, which can contain free text. The user has the ability to set a textual note that describes what he/she is doing and this note is seen by the watchers in the system. The user can set one of several status messages (e.g., busy, in a meeting, etc.), which are pre-defined notes that the system understands.

In addition to the Requests for Comments (RFCs) by Internet Engineering Task Force (IETF) and the Open Mobile Alliance (OMA) setting the basis for the concept of presence, the GSM Association (GSMA) defines a Rich Communication Suite (RCS) which provides a feature-rich portfolio of IP Multimedia Subsystem (IMS) based communication services handling presence and capability indications, rich call and rich messaging. According to the RCS Functional Description by GSMA, RCS makes use of the following functionalities:
- Publish own Social Presence Information to authorized contacts
- Invite and authorize users to share their Social Presence Information in a reciprocal way
- Display Social Presence Information and content related to each of one's enriched contacts (this information has to remain available on the device in any case: even if the device is disconnected from the network, contact's device is switched off, etc)

In accordance to the RCS Functional Description, Social Presence Information includes as attributes a free text, including textual note and possibility to add emoticons (automatic translation of some specific characters into smileys). Additionally, the RCS Technical Realization specified by GSMA and the OMA Presence SIMPLE 2.0 (Session Initial Protocol for Instant Messaging and Presence Leveraging Extensions) specification allow clients to receive multiple person elements. In that case a single person element is composed by aggregating the information contained in them. But in case there is a conflict in a specific field, the one with the most recent timestamp prevails and the rest are discarded. So, different sources can periodically refresh the person element including its own content as free text (the note element). Each new status change must be notified to the clients and they must display it in the interface.

In a typical scenario where there is presence information of one user in multiple networks, a possible approach can be to add as many pieces of information as sources of every kind of them is available. There is a lot of information that user can use as the free text for his status. Some of the information from the different sources can be directly picked out by the user himself and some others can be automatically generated by services:
- The free text he is using in other networks (e.g. instant messaging communities)
- His last posts to microblogging services
- His last posts in social networks (blogs, uploaded pictures and contents, etc.)
- His current status retrieved by ambient sensors (e.g. "Driving") or published by services (e.g. "Calling")
- Some dynamic references to things are happened to him right now in other services (e.g. songs he is listening at last.fm)
- Availability pre-configured following user preference (e.g. "from 9 to 5 I'm 'At work"')
- The handsets, services or networks the user is currently connected from

Mapping all the information to the presence data models, all the pieces of information can be added to the person element but even in that case current specifications do not define how the presence clients should deal with this information in order to present it to the users. As they do not have control when the notification is received and the different statuses are not prioritized, the status information less relevant to the user can overwrite the most relevant one.

At the end, following this approach, network resources consumption is higher and less efficient (each status update can be sent to the clients) and the status information is updated depending on the client implementation. Therefore, in the current possible solutions, Social Presence information received is not necessary reflecting its owner's willing.

WO 2009/078771 A1 discloses a presence system where the user device gathers presence information from several sources and creates a single service element for a plurality of service having similar characteristics and the same presence data. The number of presence service elements or tuples is reduced, which leads to a reduced amount of presence data to be sent between entities in the network. The system is intended for use in a presence SIMPLE based communication network, such as an IMS or an OMA (Open Mobile Alliance) system.

OMA Document "Presence SIMPLE Specification Candidate Version 2.0" of December, 2nd. 2010 is the Application Level Specification for the OMA PRS enabler defining the Presence Service framework including the composition of presence information from several presence sources. This enabler is based on the IETF SIMPLE technology and utilizes the network capabilities of a SIP/IP Core.

US 2006/224688 A1 discloses a presence system where the status of buddies and the services that they provide is sent to a watcher using common presence architecture. The watcher device is able to display the friend list with the corresponding status together with the available services and allows the watcher to select a particular service.

US 2008/235349 A1 describes a system for providing social networking services e.g. personal blog, identification of interests, access to instant messaging and electronic mail service by interworking between the social networking server and the presence server which is used to distribute context information between the buddies.

### SUMMARY OF THE INVENTION

The present invention serves to solve the aforesaid problem by providing automatic means which allow communication services to link presence information with the proper applications and network entities supporting that concrete service and so, allow the enhancement of service provisioning and usage.

An aspect of the invention refers to a method according to claim 1 or allowing a user to provide a richer Social Presence Information to his/her buddies giving them non-exclusive statuses simultaneously. Thus, their contacts have much richer information than the one they would receive if they got one single status. This method adequate for providing presence information in telecommunication systems, as social networks, having at least one user A with a plurality of presence statuses associated with a plurality of telecommunication services and having at least one client user B as a watcher of the user A is characterized by comprising the steps of classifying the plurality of presence information statuses, generated by a plurality of telecommunication services associated to the user A, in groups depending on the telecommunication service; publishing simultaneously the plurality of presence information statuses of user A on a presence server; and notifying a set of presence information statuses from the plurality of the presence information statuses of user A, to a client of the presence server which is a watcher of user A.

The set of presence information statuses notified by the presence server to the watcher may be displayed on means adapted for displaying content, for example a screen.

A second aspect of the invention refers to the possibility of giving a level of relevance to groups and statuses. The groups and statuses with more relevance are displayed before than statuses of groups with less relevance. There is no overwriting of any of them.

The invention may also include an expiration date assigned to a presence information status giving a period of validity to said presence information status and discarding notifying said presence information status, from the presence server to the watcher, when the expiration date is exceeded.

Present invention may be implemented defining extended presence attributes added to the person element in the Presence Information Data Format and setting a value for said extended presence attribute for achieving the control of displaying presence information statuses, setting levels of relevance to groups and presence information statuses or setting an expiration date for the notification of presence information statuses.

Also a computer program is provided in order to perform the steps of the method running on a general purpose processor, a digital signal processor, a FPGA, an ASIC, a micro-processor, a micro-controller, or any other form of programmable hardware.

This invention not only allows a user to have several valid statuses at the same time, but also provides the necessary information to the presence clients ,also called "watchers", to display these multiple statuses in an appropriate fashion and time according to their relevance or level of importance, source and/or nature. More specifically the statuses can be marked as for mandatory notification to the presence watchers or on the other hand as to only be notified if another high priority status is to be notified. Additionally the statuses may have a validity date after which they are no longer to be notified and displayed.

The proposed invention has an advantage, on the one hand, it allows a more flexible framework for presence where users can fine-tune the views that others have about them, including different status regarding a lot of possible aspects of their digital life, not only centered in the communication services.

From the user point of view, this flexibility allows users to enjoy a better experience when using communication services. The information periodically displayed as user statuses can also promote new impulsive communications between the users identified by the status and the one who is viewing them in his handset.

On the other hand, in addition to user experience, this new approach prevents data traffic from being wasted in order to display in the handsets the last updated status. Clients can display different statuses without receiving new updates from the network. They can also still display them although there is a most updated one, avoiding losing information that may be useful for the user that is viewing it. Since some of the presence information is directly picked out by the user himself and some other is automatically generated by services, said presence information is prioritized by the telecommunication service which they are coming and by their relevance, thus the willing of the user is reflected.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
**Figure 1** shows a flow chart which depicts successive notification of new presence statuses. PRIOR ART.
**Figure 2** shows a flow chart representing how statuses are displayed such a carousel view.
**Figure 3** shows a flow chart which depicts how a new Permanent Status is handled.
**Figure 4** shows a flow chart which depicts how a new Automatic Status is handled.
**Figure 5** shows a flow chart which depicts how a new Occasional Status that must be notified is managed.
**Figure 6** shows a flow chart which depicts how a new Occasional Status that it is not necessary to be notified is managed.
**Figure 7** how a new Occasional Status with "until" attribute that it is not necessary to be notified is managed.

### DETAILED DESCRIPTION OF THE INVENTION

Here below a practical implementation in accordance to an embodiment of the invention is described:
A user A (1) is associated with different n presence information statuses from "status 1" to "status n". They are automatically generated by telecommunication services which the user is registered and uses.
The user A also chooses his own personal status.
All this information is published in a presence server (2).

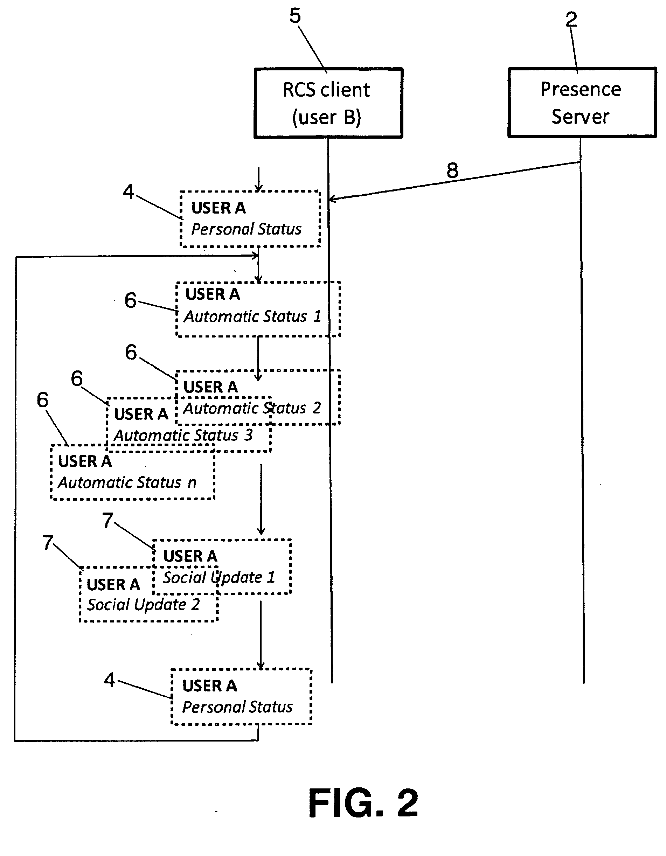

User A's willing, for his Social Presence Information available in the network, is to be identified by his personal status, but periodically, his status change displaying the automatically generated status as it is shown in Figure 2 where is represented first notification to user B of the plurality of presence information status of user A, this is a first retrieving (8) of Social Presence Information (SPI) for user A, including a personal status (4), a few automatic statuses (6) and some social updates (7), in such carousel view, the statuses are being displayed sequentially by groups selected from the kinds of presence statuses said before. Once received, the user B's presence client (5), also called " watcher" starts to display user A's statuses, starting with the personal status (4). After 'X' minutes the client starts to present the set of automatic statuses (6), displaying 'n' seconds each of them. Afterwards the social updates (7) are presented sequentially and after all of them have been displayed the personal status (4) is displayed again and a new cycle starts.

Besides, the user A is a heavy user for blogs and social networks and this aspect of his Social Life also is reflected in his Social Presence Information (e.g. "28 new pictures uploaded" or "is now friend of user B at Any Social Network").

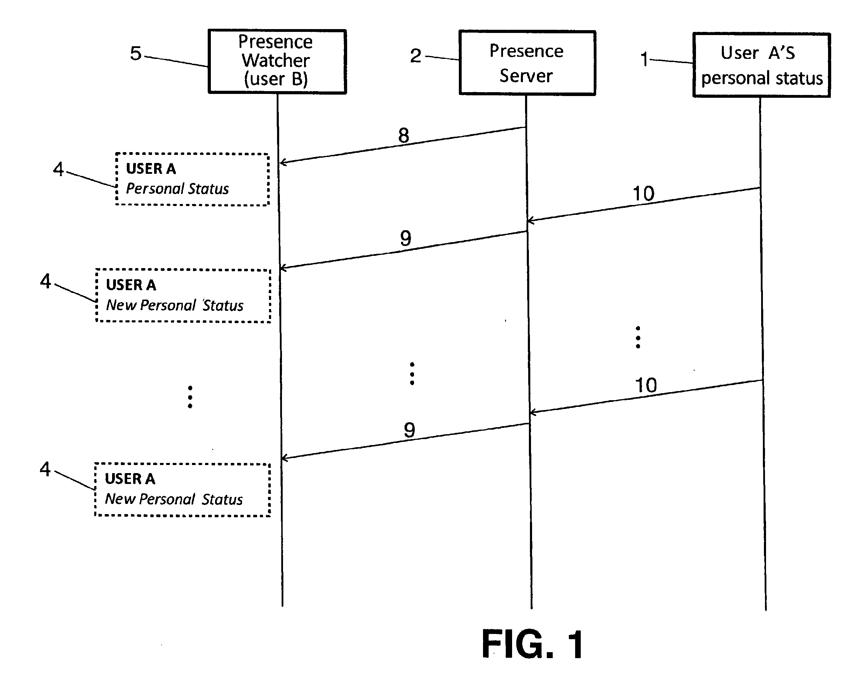

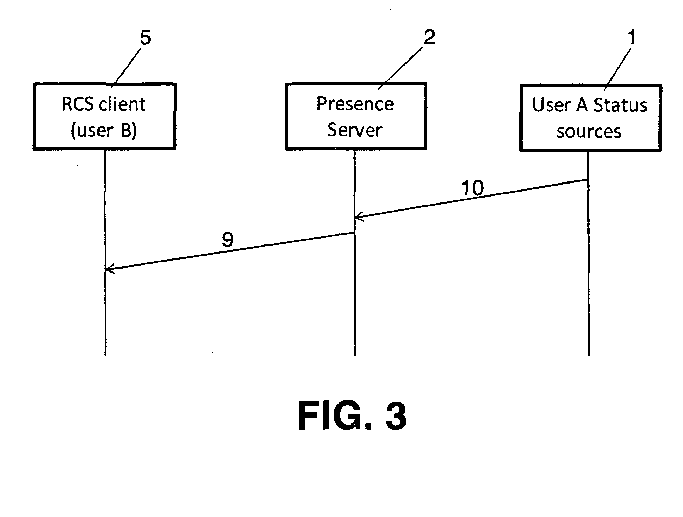

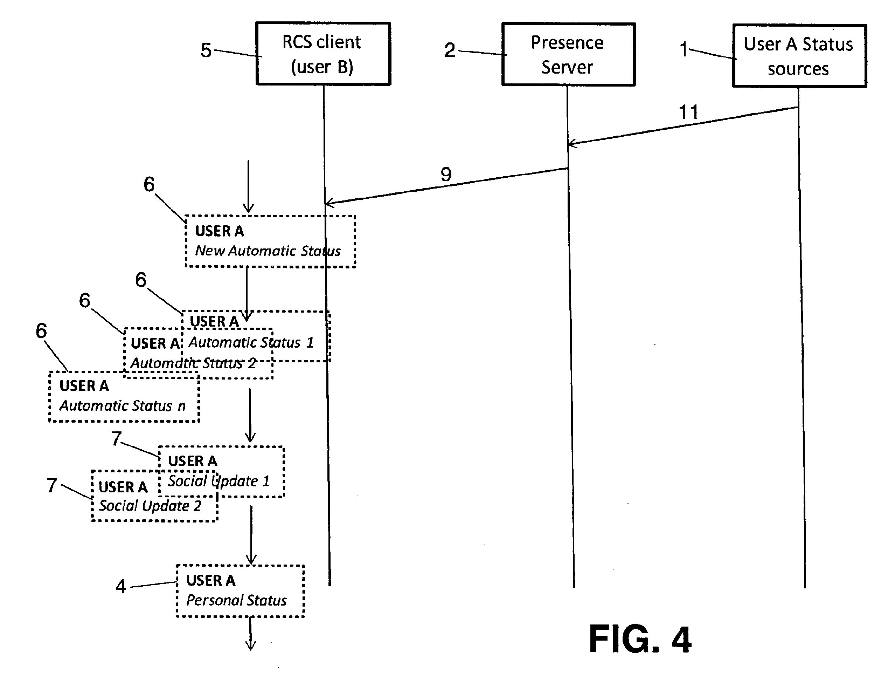

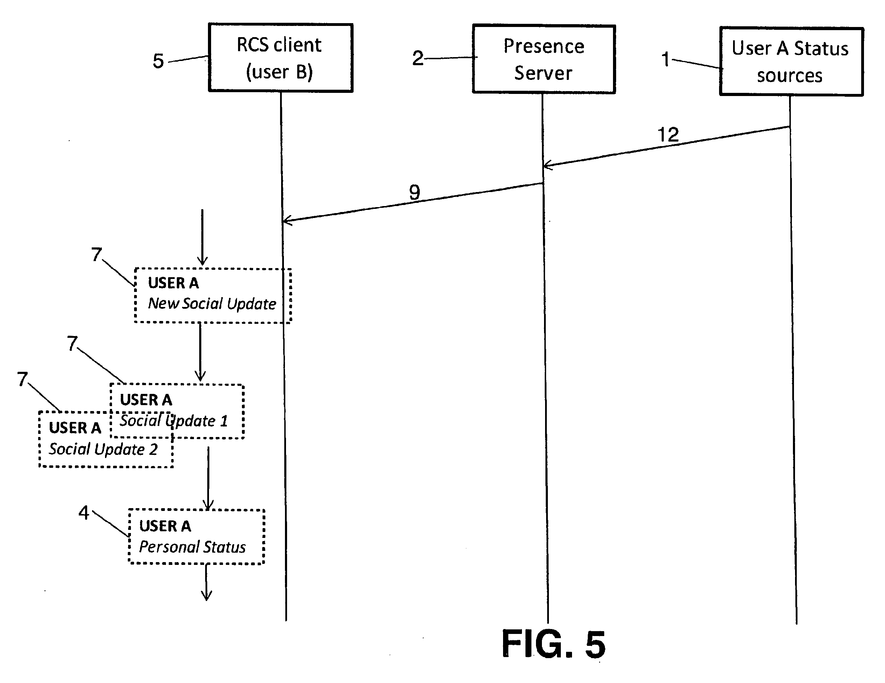

This means 3 different kinds of statuses:
**A permanent one or Personal Status (4):** the personal status that can be a default status. Every time the status is updated by any telecommunication service, it is notified to the clients.
   When a new Personal Status is published (10) by user A, the Presence Server notifies, by sending a Presence Server Information (SPI) update notification (9), user B's client, or watcher, which displays the new Personal Status and then the rest of Automatic Statuses (6) and Social Updates (7), as shown in Figure 3, and then back to the Personal Status (4), exactly as described in Figure 1.
**Automatic statuses (6):** the automatically generated ones, which are periodically displayed for a while always that they are available. Every time a new status is updated by any source, it is notified to the clients.
   When a new Automatic Status is published (11) by user A, the Presence Server notifies, sending a SPI update notification (9), user B's client (5) which displays the new Automatic Status and then the rest of Automatic Statuses and Social Updates , as described in Figure 4, and then back to the Personal Status, exactly as described in Figure 1.
**Occasional ones** or **Social Updates:** not all of them need to be notified when they happen. They must be displayed in a not long time after happen, so, if no notification is sent before that time, the social update can be discarded.
   When a new Social Update (7) is published (12) and it is a Social Update of a relevant nature (e.g. from an specific source) which needs to be notified at that moment by user A, the Presence Server notifies, sending a SPI update notification (9), user B's client (5), which displays the new Social Update (7), afterwards the rest of the Social Updates (7), as described in Figure 5, and then back to the Personal Status (4), when a new cycle like the one described in Figure 1 starts.

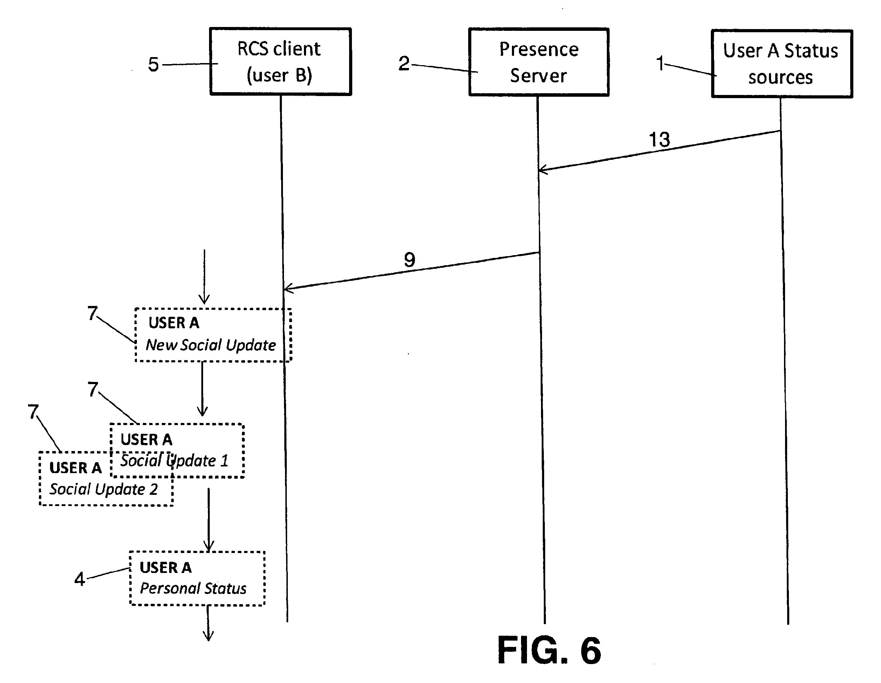

When a new Social Update is published (13) and it is a Social Update that does not need to be notified at that very moment by user A, the Presence Server waits a predefined time or until another relevant status is published and then notifies, sending a SPI update notification (9), user B's client (5) which in turn displays the new statuses, as described in Figure 6, then the rest of the Social Updates (7) and then back to the Personal Status (4), when a new cycle like the one described in Figure 1 starts.

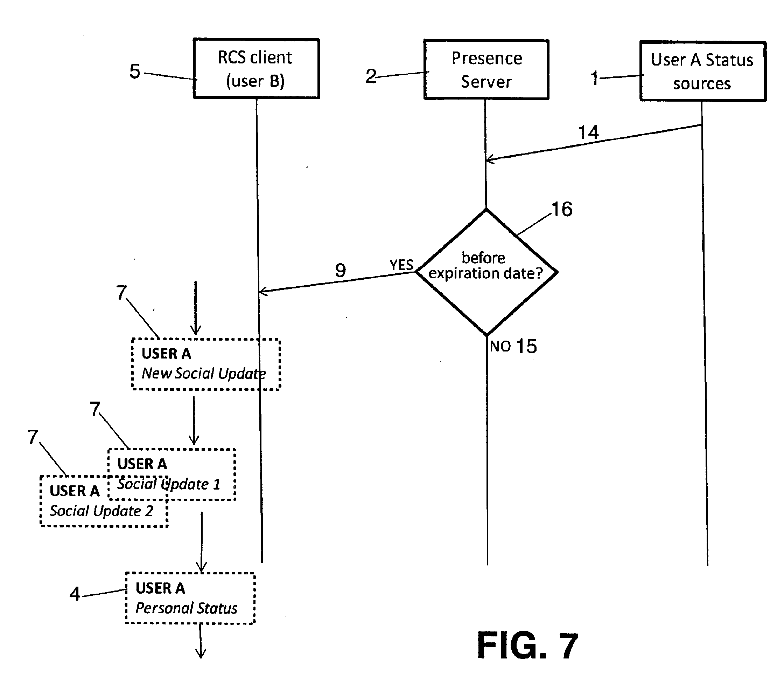

When a new Social Update is published (14), and it is a Social Update that does not need to be notified at that very moment by user A, and it has a validity period or expiration date, the Presence Server waits a predefined time, or until another relevant status is published, and then notifies user B's client (5) the new status if it is still before the expiration date (16), so a SPI update notification is sent (9). Otherwise no notification is sent (15). User B's client displays in turn the new statuses, as described in Figure 7, then the rest of the Social Updates and then back to the Personal Status, when a new cycle like the one described in Figure 1 starts.

### Example of technical embodiment of the invention

It is added this technical embodiment to exemplify the implementation of the concept.
In order to handle presence information in the way explained along the document, we need to extend the format defined by RFC4479.

Definition for person element in a presentity is:

```
  <xs:element name="person">
   <xs:annotation>
    <xs:documentation>Contains information about the human
    user</xs:documentation>
   </xs:annotation>
   <xs:complexType>
    <xs:sequence>
    <xs:any namespace="##other" processContents="lax"
     minOccurs="0" maxOccurs="unbounded">
     <xs:annotation>
     <xs:documentation>Characteristic and status
      information</xs:documentation>
     </xs:annotation>
    </xs:any>
    <xs:element name="note" type="Note_t" minOccurs="0"
     maxOccurs="unbounded"/>
    <xs:element name="timestamp" type="Timestamp t" minOccurs="0"/>
   </xs:sequence>
   <xs:attribute name="id" type="xs:ID" use="required"/>
   </xs:complexType>
  </xs:element>
  <xs:complexType name="Note_t">
   <xs:annotation>
   <xs:documentation>Note type</xs:documentation>
   </xs:annotation>
   <xs:simpleContent>
   <xs:extension base="xs:string">
    <xs:attribute ref="xml:lang"/>
    </xs:extension>
   </xs:simpleContent>
  </xs:complexType>
```

As it can be noted the person element can have zero or more "Note_t" elements and optionally a "Timestamp". The "Note_t" element is actually a string.

This invention defines additional attributes to the complex type "Note_t":
- 'display' attribute, that can be set to "default" for the personal status that is always visible, "carousel" for automatic statuses being displayed only each certain time or "social" for social updates.
- 'priority' attribute, a number from 1 to 0 that clients can use to distribute displaying time among the statuses of type carousel (how are time-slots assigned to priority depends on implementation).
- 'until' attribute, that allows statuses source establish when displaying the status doesn't have sense, so it works like a expiration date.

New XML definition for the type "Note_t" could be as follow:

```
          <xs:complexType name="Note_t">
          <xs:annotation>
           <xs:documentation>Note type</xs:documentation>
          </xs:annotation>
          <xs:simpleContent>
           <xs:extension base="xs:string">
           <xs:attribute ref="xml:lang"/>
           </xs:extension>
          </xs:simpleContent>
          <xs:attribute name="display" use="required">
           <xs:simpleType>
           <xs:restriction base="xs:string">
            <xs:enumeration value="default"/>
            <xs:enumeration value="carousel"/>
            <xs:enumeration value="social"/>
           </xs:restriction>
           </xs:simpleType>
          </xs:attribute>
          <xs:attribute name="priority">
           <xs:simpleType>
           <xs:restriction base="xs:decimal">
            <xs:precision value="1"/>
            <xs:scale value="2"/>
            <xs:minlnclusive value="0"/>
            <xs:maxlxclusive value="1"/>
           </xs:restriction>
           </xs:simpleType>
          </xs:element>
          <xs:attribute name="until" type="xs:dateTime" minOccurs="0"/>
         </xs:complexType>
```

In this XML the new attributes ("display", "priority" and "until") have been added to the "Note_t" element.

An example for the element person following this definition could be:

```
          <pdm:person id="a1233">
          <op:overriding-willingness opd:until="2008-10-28T21:00:00Z">
           <op:basic>open</op:basic>
          </op:overriding-willingness>
          <c:homepage>http://example.com/∼alice</c:homepage>
          <pdm:note type="default">l hate Mondays</pdm:note>
          <pdm:note until="2005-05-30T17:00:00+05:00"
             type="social">5 new pictures on Flickr</pdm:note>
          <pdm:note until="2009-04-10T12:02:00+15:00"
             type="social">You're now connected with Alice at
       Facebook</pdm: note>
          <pdm:note type="carousel">Driving</pdm:note>
          <pdm:note type="carousel">Available for sending SMS, not
       MMS</pdm:note>
          <pdm:note type="carousel">Location Currently Available</pdm:note>
          </pdm:person>
```

In this example the person element have six note elements, representing six different non-exclusive statuses of different types and priorities that therefore need to be presented in a different fashion by the presence client.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. Method for providing presence information in telecommunication systems, comprising the steps of:
- classifying the plurality of presence information statuses, generated by a plurality of telecommunication services associated to a user A (1), in groups depending on the telecommunication service;
- publishing simultaneously the plurality of presence information statuses of user A on a presence server (2);
- user A assigning a level of relevance to the groups and to each presence information status classified into the same group;
- notifying a set of presence information statuses from the plurality of the presence information statuses of user A, to a client (5) of the presence server (2) which is a watcher of user A, wherein the level of relevance assigned to a group decides if a presence information status belonging to said group is notified by the presence server (2) to the watcher (5) immediately or the presence information status waits to be notified together when another presence information status of greater relevance Is published on the presence server;
- displaying the set of presence information statuses, notified by the presence server to the watcher, on means adapted for displaying content; being presence information statuses of groups with more relevance displayed before than presence information statuses of a group with less relevance and arranging the order and time for the presence information statuses of the same group to be displayed.

2. Method of claim 1 further comprising assigning an expiration date assigned to a presence information status giving a period of validity to said presence information status and discarding notifying said presence information status, from the presence server to the watcher, when the expiration date is exceeded.

3. Method of claim 2 wherein the presence information statuses already notified to the watcher are displayed periodically until an update of a presence information status of a group with a greater level of relevance is notified, in this case said update is displayed and then the rest of presence information statuses of the same group go on with the same order of presence information statuses and groups set before the notification.

4. Method of any one of previous claims wherein a presence information status is stored at the watcher and displayed periodically even although an update of the same telecommunication service is notified to the watcher.

5. Method of claim 1 wherein determining the group a presence information status belongs to and thus its relevance and the way it is displayed on the watcher is achieved by setting a value for an extended presence attribute added to the person element defined in the Presence Information Data Format.

6. Method of claim 1 wherein the level of relevance is set defining a value for an extended presence attribute added to the person element defined In the Presence Information Data Format.

7. Method of claim 2 wherein discarding a notification of an update of a presence information status is set defining an expiration date for an extended presence attribute added to the person element defined in the Presence Information Data Format.

8. A computer program comprising program code means adapted to perform the steps of the method according to any claims from 1 to 7, when said program is run on a general purpose processor, a digital signal processor, a FPGA, an ASIC, a micro-processor, a micro-controller, or any other form of programmable hardware.

## Patentansprüche

1. Verfahren zum Bereitstellen von Präsenzinformationen in Telekommunikationssystemen aufweisend die Schritte:
- Klassifizieren der Vielzahl von Präsenzinformationsstati, welche durch eine Vielzahl von Telekommunikationsservices erzeugt werden, welche mit einem Nutzer A (1) in Verbindung stehen, in Gruppen abhängig von dem Telekommunikationsservice;
- zeitgleiches Veröffentlichen der Vielzahl von Präsenzinformationsstati des Nutzers A auf einem Präsenzserver (2),
- Zuweisen durch Nutzer A ein Niveau der Relevanz zu den Gruppen und zu jedem Präsenzinformationsstatus, welcher in derselben Gruppe klassifiziert ist;
- Melden eines Sets der Präsenzinformationsstati von der Vielzahl der Präsenzinformationsstati des Nutzers A an einen Client (5) des Präsenzservers (2), welcher ein Beobachter des Nutzers A ist, wobei das Niveau der Relevanz, welches einer Gruppe zugeordnet wurde, entscheidet ob ein Präsenzinforationsstatus, welcher zu dieser Gruppe gehört, durch den Präsenzserver (2) an den Beobachter (5) sofort gemeldet wird, oder ob der Präsenzinformationsstatus wartet, um zusammen gemeldet zu werden, wenn ein anderer Präsenzinformationsstatus von höherer Relevanz auf dem Präsenzserver veröffentlicht wird;
- Anzeige des Sets von Präsenzinformationsstati, welche durch den Präsenzserver an den Beobachter gemeldet wurden, auf Mitteln, welche ausgelegt sind, Inhalt darzustellen; wobei Präsenzinformationsstati von Gruppen mit mehr Relevanz vor Präsenzinformationsstati einer Gruppe mit weniger Relevanz dargestellt wird und Anordnen der Reihenfolge und der Zeit der Präsenzinformationsstati derselben Gruppe, um sie dazustellen.

2. Verfahren nach Anspruch 1 des Weiteren aufweisend
Zuordnen eines Ablaufdatums, welches einem Präsenzinformationsstatus zugeordnet ist, welches einer Gültigkeitszeitspanne zu dem Präsenzinformationsstatus angibt und Verwerfen des Meldens des Präsenzinformationsstatus von dem Präsenzserver zu dem Beobachter, wenn das Ablaufdatum abgelaufen ist.

3. Verfahren nach Anspruch 2,
wobei die Präsenzinformationsstati, welche bereits dem Beobachter gemeldet sind, periodisch angezeigt werden bis ein Update eines Präsenzinformationsstatus einer Gruppe mit einem höheren Niveau der Relevanz gemeldet wird, wobei in diesem Fall das Update angezeigt wird und der Rest der Präsenzinformationsstati derselben Gruppe in derselben Reihenfolge der Präsenzinformationsstati und Gruppen, welche vor der Benachrichtigung festgelegt wurde, weiterverfolgt wird.

4. Verfahren nach einem der vorhergehenden Ansprüche,
wobei ein Präsenzinformationsstatus bei dem Beobachter gespeichert ist und periodisch angezeigt wird, obwohl ein Update desselben Telekommunikationsservices an den Beobachter gemeldet ist.

5. Verfahren nach Anspruch 1,
wobei das Feststellen der Gruppe, zu welcher ein Präsenzinformationsstatus gehört und somit seine Relevanz und die Art wie er auf dem Beobachter dargestellt wird, durch Festlegen eines Wertes für eine erweiterte Präsenzeigenschaft, welches zum Personenelement hinzugefügt wird, welches in dem Präsenzinformationsdatenformat definiert ist, erreicht wird.

6. Verfahren nach Anspruch 1,
wobei das Niveau der Relevanz durch Definieren eines Wertes für eine erweiterte Präsenzeigenschaft, welche zu dem Personenelement hinzugefügt wird, welches in dem Präsenzinformationendatenformat definiert ist, festgelegt wird.

7. Verfahren nach Anspruch 2,
wobei das Verwerfen einer Meldung eines Updates eines Präsenzinformationsstatus festgelegt ist durch Definieren eines Ablaufdatums für eine erweiterte Präsenzeigenschaft, welche zu einem Personenelement hinzugefügt ist, welche in dem Präsenzinformationsdatenformat definiert ist.

8. Computerprogramm aufweisend Programmcodemittel ausgebildet die Schritte des Verfahrens nach einem der Ansprüche 1 bis 7 auszuführen, wenn das Programm auf einem Mehrzweckprozessor, einem digitalen Signalprozessor, einem FPGA, einem ASIC, einem Mikroprozessor, einem Mikrocontroller oder einer anderen Form von programmierbarer Hardware läuft.

## Revendications

1. Procédé permettant de donner des informations de présence dans des systèmes de télécommunications, comprenant les étapes suivantes :
- classement de la pluralité d'états d'information de présence, générés par une pluralité de services de télécommunications associés à un utilisateur A (1), en groupes, en fonction du service de télécommunications ;
- publication simultanée de la pluralité d'états d'information de présence de l'utilisateur A sur un serveur de présence (2) ;
- attribution, par l'utilisateur A, d'un niveau de pertinence aux groupes et à chaque état d'information de présence classé dans le même groupe ;
- notification d'un ensemble d'états d'information de présence parmi la pluralité d'états d'information de présence de l'utilisateur A, à un client (5) du serveur de présence (2) qui est un observateur de l'utilisateur A, dans lequel le niveau de pertinence attribué à un groupe décide si un état d'information de présence appartenant au dit groupe est notifié immédiatement par le serveur de présence (2) à l'observateur (5) ou si l'état d'information de présence attend d'être notifié en même temps qu'un autre état d'information de présence ayant une pertinence plus élevée est publié sur le serveur de présence ;
- affichage de l'ensemble d'états d'information de présence, notifiés par le serveur de présence à l'observateur, sur des moyens conçus pour afficher un contenu, comme étant des états d'information de présence de groupes ayant une plus grande pertinence affichés avant que des états d'information de présence d'un groupe ayant une moindre pertinence, et agencement de l'ordre et du moment de l'affichage des états d'information de présence du même groupe.

2. Procédé selon la revendication 1, comprenant en outre l'attribution d'une date d'expiration attribuée à un état d'information de présence en donnant une période de validité au dit état d'information de présence et la mise au rebut de la notification dudit état d'information de présence, entre le serveur de présence et l'observateur, lorsque la date d'expiration est dépassée.

3. Procédé selon la revendication 2, dans lequel les états d'information de présence déjà notifiés à l'observateur sont affichés périodiquement jusqu'à ce qu'une mise à jour d'un état d'information de présence d'un groupe ayant un niveau de pertinence plus élevé soit notifiée, dans ce cas, ladite mise à jour est affichée et le reste des états d'information de présence du même groupe se poursuit dans le même ordre des états d'information de présence et des groupes instaurés avant la notification.

4. Procédé selon l'une quelconque des revendications précédentes, dans lequel un état d'information de présence est mémorisé au niveau de l'observateur et affiché périodiquement même si une mise à jour du même service de télécommunications est notifiée à l'observateur.

5. Procédé selon la revendication 1, dans lequel la détermination du groupe auquel un état d'information de présence appartient, et donc sa pertinence et la manière dont il est affiché sur l'observateur est réalisé en instaurant une valeur pour un attribut de présence étendue ajouté à l'élément de personne défini dans le Format de Données d'Informations de Présence.

6. Procédé selon la revendication 1, dans lequel le niveau de pertinence est instauré en définissant une valeur pour un attribut de présence étendue ajouté à l'élément de personne défini dans le Format de Données d'Informations de Présence.

7. Procédé selon la revendication 2, dans lequel la mise au rebut d'une notification d'une mise à jour d'un état d'information de présence est instaurée en définissant une date d'expiration pour un attribut de présence étendue ajouté à l'élément de personne défini dans le Format de Données d'Informations de Présence.

8. Programme informatique comprenant des moyens de codage de programme conçus pour exécuter les étapes du procédé selon l'une quelconque des revendications 1 à 7, lorsque ledit programme est exécuté sur un processeur universel, un FPGA, un ASIC, un microprocesseur, un microcontrôleur, ou toute autre forme de matériel programmable.
